# EUROPÄISCHE PATENTSCHRIFT

(11) **EP 1 546 567 B1**
(45) Veröffentlichungstag und Bekanntmachung des Hinweises auf die Patenterteilung: **23.01.2008**
(21) Anmeldenummer: 03748050.6
(22) Anmeldetag: 18.09.2003
(51) Int. Cl.: F16B 21/08, F16B 19/00, F16B 2/22

(54) **BEFESTIGUNGSELEMENT**
FIXING ELEMENT
ELEMENT DE FIXATION

(30) Priorität: 27.09.2002 DE 10245276
(43) Veröffentlichungstag der Anmeldung: 29.06.2005
(73) Patentinhaber: A. RAYMOND ET CIE, 38000 Grenoble (FR)
(72) Erfinder: ZOUBEK, Viktor, 46601 Jablonec nad Nisou (CZ); SASEK, Vaclav, 46006 Liberec (CZ)
(74) Vertreter: Rüttgers, Joachim
(86) Internationale Anmeldenummer: PCT/EP2003/010364
(87) Internationale Veröffentlichungsnummer: WO 2004/031598

(56) Entgegenhaltungen:
- DE-U- 8 113 637
- US-A- 4 981 310

## Beschreibung

Die Erfindung betrifft ein Befestigungselement zur Befestigung eines Bauteils an einem Trägerteil mit einem Halterungsteil für das zu befestigende Bauteil, einem hohlen Ankerfuß, mit dem das Befestigungselement in einer durchgehenden Bohrung des Trägerteils verankerbar ist, und einem zwischen dem Halterungsteil und dem Ankerfuß angeordneten federnden Anschlag, wobei die Wand des Ankerfußes zwei einander gegenüberliegende Durchbrüche aufweist, von deren Unterkante jeweils zwei sich in Richtung auf das Halterungsteil spreizende Federarme ausgehen, die an ihrem Ende Stirnflächen aufweisen, die nach dem Einsetzen des Befestigungselements in die Bohrung eines Trägerteils an dessen Unterseite zur Anlage kommen, wobei die Stirnflächen zweier sich diagonal gegenüberliegender Federarmpaare in zwei verschiedenen Ebenen liegen.

Solche Befestigungselemente sind an sich bekannt, sie eignen sich zum überwiegenden Teil aber nur zur Befestigung in einer Bohrung des Trägerteils mit einem bestimmten Durchmesser und für eine bestimmte Materialstärke des Trägerteils. Es müssen also für Bohrungen mit davon abweichenden Durchmessern und für Trägerteile mit abweichender Materialstärke jeweils besondere, daran angepasste Befestigungselemente gefertigt werden.

Durch die DE 201 01 328 U1 ist ein Befestigungselement bekannt, bei dem bei der Befestigung eines flächigen Körpers an einem zweiten flächigen Körper mit Hilfe mehrerer solcher Befestigungselemente ein Toleranzausgleich zwischen den Befestigungspunkten möglich ist, indem das Befestigungselement zweiteilig ausgebildet ist und der Ankerfuß im Halterungsteil senkrecht zur Mittelachse beweglich ist. Ein Verdrehen des Ankerfußes im Halterungsteil wird durch seitliche Überstände am Schaft verhindert. Die Außenflächen der Federarme können, aber müssen nicht, durch einen Absatz in zwei Abschnitte unterteilt sein, so dass der eine flächige Körper bei der Montage zu dem anderen flächigen Körper eine Zwischen- oder Vormontagestellung einnehmen kann, in der die Verbindung noch lose, beziehungsweise der eine Körper noch seitlich bewegbar ist. Dazu ist der von den Außenflächen der Federarme bestimmte Durchmesser hinter dem genannten Absatz kleiner als der Durchmesser der Bohrung im Körper, in die der Ankerfuß gesteckt werden soll. Die eigentliche Befestigung kommt dann erst in einem zweiten Schritt zustande, wenn der Rand der Bohrung von einer Stufe am freien Ende der Federarme hintergriffen wird.

Die DE 2 153 062 A1 offenbart ein Befestigungselement, bei dem die freien Enden der aufgespreizten Federarme, wo sie am Rand der Bohrung im Trägerteil zur Anlage kommen sollen, konkav gebogen sind. Damit soll erreicht werden, dass sich dasselbe Befestigungselement zur Verankerung in Bohrungen mit verschiedenen Durchmessern innerhalb eines bestimmten Bereiches eignet. Eine sichere, wackelfreie Verankerung kann mit der kurvigen Anlagefläche der Federarme jedoch nicht erreicht werden; dies liegt auch daran, dass hier nicht die Verankerung in Bohrungen mit verschiedenen Durchmessern bestimmter Größe sondern mit sich über einen Bereich ändernden Durchmessern angestrebt ist. Paarweise seitlich und im rechten Winkel zueinander abstehende Fortsätze am Schaft können ein horizontales Verschieben des Ankerfußes in der Bohrung nur bei einem bestimmten Durchmesser, also einer Bohrung nur einer Größe verhindern. In einer Bohrung mit kleinerem Durchmesser ließe sich das Befestigungselement gar nicht montieren, bei einer Bohrung mit größerem Durchmesser bestünde die Gefahr, dass sich die Federarme auf Grund des seitlichen Spiels des Ankerfußes aushakten.

Durch die US 2,424,757 ist ein Befestigungselement bekannt, mit dem ein zylindrisches Bauteil an einem plattenförmigen Trägerteil befestigt werden kann. Es besteht aus einer Hülse, die auf das zylindrische Bauteil geschoben wird und von der seitlich ein Paar sich aufspreizende Federarme abragen. Die freien Enden dieser Federarme sind mehrfach abgestuft. Damit soll die Verankerung in Trägerteilen unterschiedlicher Dicke ermöglicht werden. Auch hier besteht die Gefahr des Aushakens der Federarme. Insgesamt ergibt sich damit praktisch nur eine unsichere Befestigung in einer Bohrung eines Trägerteils.

In der DE 43 07 434 A1 beziehungsweise der korrespondierenden EP 0 615 071 B1 ist ein Halteelement beschrieben, das als Ankerfuß einen Grundkörper mit rechteckigem Querschnitt aufweist. Dieser Grundkörper ist an allen seinen vier Seitenflächen mit sich jeweils diagonal gegenüberliegenden Rastnasen versehen, die in Ausnehmungen in den Seitenflächen des Grundkörpers hineinbewegt werden können. Zwei der einander gegenüberliegenden Rastnasen sind T-förmig und am T-Balken mit einer dem Halterungsteil zugewandten Stirnfläche ausgebildet. Hierdurch soll die Wirkung eines Zentrierkäfigs und damit die sichere Halterung in der Bohrung eines Trägerteils erreicht werden, auch wenn sich das Halteelement in der Bohrung um seine Längsachse dreht. Die Stirnflächen der vorgesehenen Rastnasen können alle in derselben Horizontalebene liegen, sie können aber auch paarweise in unterschiedlichen Horizontalebenen liegen, so dass das Halteelement an Trägerteilen unterschiedlicher Dicke eingesetzt werden kann.

Durch die DE-GM 81 13 637, die dem Oberbegriff von Anspruch 1 entspricht, ist ein Halteelement bekannt, das ebenfalls die Verwendung an Trägerteilen unterschiedlicher Materialstärken ermöglichen soll. Nach einem der hier beschriebenen Ausführungsformen sind an einem im Querschnitt runden, den Ankerfuß bildenden Grundkörper zwei auf das Halterungsteil gerichtete Federzungenpaare ausgebildet, deren Stirnflächen auch hier paarweise in verschiedenen horizontalen Ebenen liegen. Dabei liegen die einen Federzungen beider Federzungenpaare am Umfang des Grundkörpers unmittelbar nebeneinander und ebenso die anderen Federzungen der Federzungenpaare, und zwar in der Weise, dass die Federzungen des kürzeren Federpaares den Federzungen des längeren Federpaares sich direkt gegenüberliegen, ihre Anordnung also diagonal versetzt ist. Damit soll eine sichere Halterung in Trägerteilen von hier zwei unterschiedlichen Materialstärken erreicht werden. Um noch weitere Materialstärken abdecken zu können, sollen zusätzliche Federzungenpaare mit Stirnflächen in entsprechend unterschiedlichen horizontalen bis schräg zur Horizontalen ausgerichtete Ebenen am Umfang des Grundkörpers vorgesehen werden.

Die bekannten Halte- oder Befestigungselemente sind darauf ausgerichtet, entweder für Bohrungen unterschiedlichen Durchmessers in Trägerteilen oder an Trägerteilen unterschiedlicher Dicke beziehungsweise Materialstärke eingesetzt werden zu können. Dabei ist ihre Ausgestaltung häufig recht kompliziert, was hohe Herstellungskosten bedingt und eine sichere, wackelfreie Verbindung doch nicht immer zuverlässig gewährleistet.

Aufgabe der Erfindung ist es, ein Befestigungselement der eingangs genannten Art zu schaffen, bei dem der Ankerfuß so ausgebildet ist, dass es sowohl bei Trägerteilen mit Bohrungen unterschiedlichen Durchmessers als auch an Trägerteilen unterschiedlicher Materialstärke einsetzbar ist und dabei eine sichere, wackelfreie Verankerung gewährleistet, insbesondere ein Aushaken der Federarme bei einer seitlichen Belastung des Befestigungselements ausgeschlossen ist. Vorzugsweise soll das neue Befestigungselement nicht nur in Bohrungen mit bestimmten unterschiedlichen Durchmessers und an Trägerteilen bestimmter unterschiedlicher Dicke einsetzbar sein, sondern seine Verwendbarkeit soll sich über einen zumindest annähernd stetigen Durchmesserbereich und einen zumindest annähernd stetigen Materialstärkenbereich erstrecken.

Dies wird bei einem Befestigungselement der eingangs genannten Art erfindungsgemäß dadurch erreicht, dass sowohl die kurzen Federarme als auch die langen Federarme sich ausgehend von der Unterkante des jeweiligen Durchbruchs in Richtung auf das Halterungsteil radial bis zu einer Außenkante der kurzen Federarme und zu einer Außenkante der langen Federarme erweitern und danach durch mehrere Stufen bis zu ihrer jeweiligen Stirnfläche radial zurückgenommen sind und dadurch an jedem Federarm mehrere in verschiedenen Ebenen horizontal bis schräg zur Horizontalen ausgerichtete Stufenflächen und mehrere vertikale Anlageflächen in unterschiedlichem radialen Abstand zur Mittelachse des Befestigungselements gebildet sind, wobei die Stirnflächen und die einzelnen Stufenflächen eines jeweiligen Federarmpaares jeweils in den gleichen verschiedenen Ebenen und dessen einzelne vertikale Anlageflächen im jeweils gleichen radialen Abstand zur Mittelachse liegen, aber im Vergleich zum anderen Federarmpaar in unterschiedlichen Ebenen beziehungsweise in unterschiedlichem radialen Abstand zur Mittelachse liegen.

Damit ist bei einem einzigen Befestigungselement die Verwendbarkeit sowohl bei verschiedenen Loch- oder Bohrungsdurchmessern im Trägerteil als auch bei unterschiedlichen Materialstärken des Trägerteils erreicht. Durch die in versetzten Ebenen liegenden Stirn- und Stufenflächen und die in versetzten radialen Abständen zur Mittelachse ausgebildeten vertikalen Anlageflächen kann ein jeweils weiter Bereich von unterschiedlichen Bohrungsdurchmessern und Materialstärken in sehr kleinen Stufen abgedeckt werden.

Es ist vorteilhaft, wenn der größte radiale Abstand einer Außenkante eines Federarms zur Mittelachse des Befestigungselements soviel größer ist als der halbe Durchmesser einer größten Bohrung im Trägerteil, dass bei einer seitlichen Belastung des Befestigungselements der Ankerfuß nicht aushaken kann, und wenn der kleinstmögliche radiale Abstand von der Wurzel der Federarme zur Mittelachse geringfügig kleiner ist als der halbe Durchmesser einer kleinsten Bohrung im Trägerteil, so dass sich der Ankerfuß des Befestigungselements ohne Probleme auch in die kleinste vorgesehene Bohrung einführen lässt.

Die Abstufungen an den kurzen Federarmen und die Abstufungen an den langen Federarmen sind vorzugsweise so zueinander versetzt, dass die Stirnflächen beziehungsweise die in verschiedenen Ebenen horizontal bis schräg zur Horizontalen ausgerichteten Stufenflächen der langen Federarme und die Stirnflächen beziehungsweise die in verschiedenen Ebenen horizontal bis schräg zur Horizontalen ausgerichteten Stufenflächen der kurzen Federarme mit zunehmender Materialstärke eines Trägerteils abwechselnd an der Unterseite eines Trägerteils zur Anlage bringbar sind und dass entsprechend die vertikalen Anlageflächen der kurzen Federarme und die vertikalen Anlageflächen der langen Federarme mit zunehmendem Bohrungsdurchmesser abwechselnd an der Umfangsfläche einer Bohrung in Anlage bringbar sind. Durch diese an den beiden Federarmpaaren abwechselnd versetzten in verschiedenen Ebenen liegenden Stirn- beziehungsweise Stufenflächen und vertikalen Anlageflächen können der Durchmesserbereich der Bohrungen und der Materialstärkenbereich des Trägerteils in besonders kleinen Stufen abgedeckt werden. Für den Materialstärkenbereich erfolgt durch den federnd auf der Oberseite des Trägerteils zur Auflage kommenden Anschlag die Anpassung zwischen den Stufen in kontinuierlicher Weise.

Die Erfindung wird im folgenden anhand der anhängenden Zeichnung beispielhaft näher beschrieben; es zeigen
Fig. 1 eine perspektivische Ansicht einer Ausführungsform des erfindungsgemäßen Befestigungselements,
Fig. 2 eine Seitenansicht des Befestigungselements nach Fig. 1 im Zusammenhang mit der abdeckbaren Materialstärke F,
Fig. 3 die Seitenansicht gemäß Fig. 2 im Zusammenhang mit dem abdeckbaren Bohrungsdurchmesserbereich,
Fig. 4 die gegenüber Fig. 3 um 90° gedrehte Seitenansicht des Befestigungselements im Zusammenhang mit dem abdeckbaren Bohrungsdurchmesserbereich und
Fig. 5 einen im Maßstab verkleinerten Querschnitt durch den Ankerfuß oberhalb des kürzeren Federarmpaares gemäß Fig. 4.

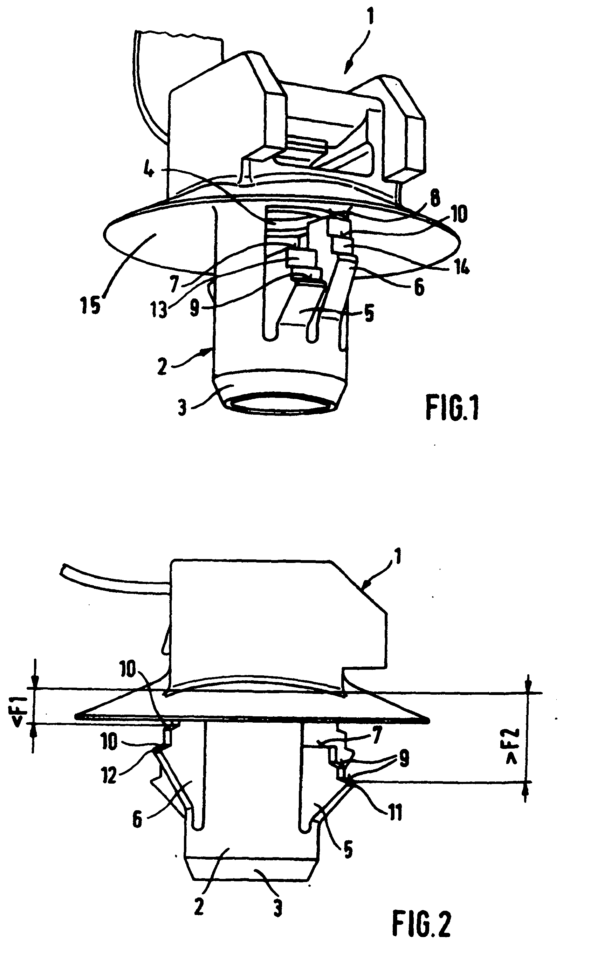

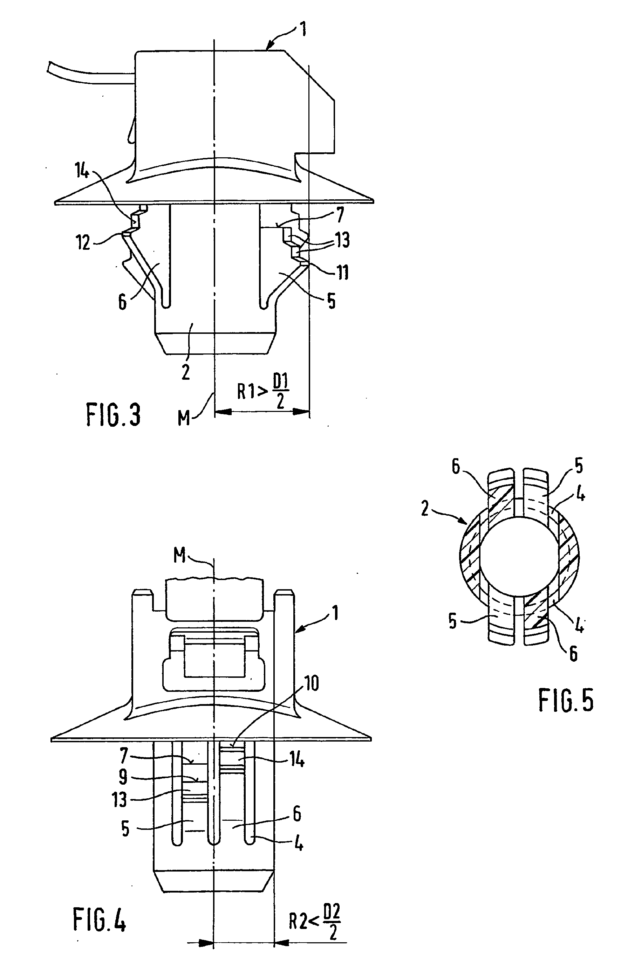

Die Fig. 1 bis 3 zeigen in unterschiedlichen Ansichten ein Befestigungselement mit einem Halterungsteil 1 für das an einem nicht dargestellten, vorzugsweise plattenförmigen Trägerteil, z.B. einem Montageblech, zu befestigende Bauteil und einem mit dem Halterungsteil 1 fest verbundenen Ankerfuß 2 mit dem das Befestigungselement in einer durchgehenden Bohrung des Trägerteils fest verankert werden kann. Auf die Ausbildung dieses Ankerfußes 2 bezieht sich im wesentlichen die vorliegende Erfindung. Der Ankerfuß 2 hat die Form eines Hohlzylinders, dessen Wand an seinem freien Ende, wie an sich bekannt, eine leichte Abschrägung 3 aufweist, die das Einführen des Ankerfußes 2 in die Bohrung des Trägerteils erleichtert. Die zylindrische Wand des Ankerfußes 2 ist mit zwei sich gegenüberliegenden Durchbrüchen 4 versehen, die bis an das Halterungsteil 1 heranreichen. Aus der unteren Kante jeder dieser Durchbrüche 4 ragen zwei nebeneinander liegende Federarme 5, 6 ab, die sich in Richtung auf das Halterungsteil 1 paarweise aufspreizen. Dabei ist das eine Federarmpaar **5** kürzer als das andere Federarmpaar **6.** Ihre Anordnung ist so getroffen, dass der kürzere Federarm **5** an dem einen Durchbruch **4** dem längeren Federarm **6** an dem anderen Durchbruch **4** direkt gegenüberliegt und umgekehrt (siehe dazu auch Fig. 5). Die Federarmpaare **5** und **6** weisen somit Stirnflächen **7** und **8** auf, die in verschiedenen Ebenen liegen. Beim Einführen des Ankerfußes **2** in eine dafür vorgesehene Bohrung am Trägerteil kommt je nach Materialstärke des Trägerteils das eine oder das andere Federarmpaar **5, 6** mit seinen Stirnflächen **7** oder **8** an der Unterseite des Trägerteils zur Anlage. Um eine Verankerung nicht nur an Trägerteilen mit zwei bestimmten unterschiedlichen Materialstärken zu ermöglichen, sondern einen ganzen Materialstärkenbereich abdekken zu können, weisen die Federarme **5, 6** ausgehend von ihrer jeweiligen Stirnfläche **7, 8** absteigend bis zur ihrer jeweiligen Außenkante **11, 12** mehrere (im dargestellten Beispiel zwei) Abstufungen mit jeweils auf das Halterungsteil gerichteten, in verschiedenen Ebenen horizontal bis schräg zur Horizontalen ausgerichteten Stufenflächen **9, 10** auf (siehe dazu auch Fig. 2). Dabei liegen die Stufenflächen **9, 10** des einen Federarmpaares **5, 6** in jeweils gleichen Ebenen aber im Vergleich zum jeweils anderen Federarmpaar **6, 5** in verschiedenen Ebenen. Die Federarmpaare **5, 6** bieten also mit ihren Stirnflächen **7, 8** und mit ihren Stufenflächen **9, 10** Abstützflächen für die Unterseite eines Trägerteils in mehreren, im dargestellten Beispiel sechs, verschiedenen Ebenen in kleinen Abständen. Auf diese Weise lässt sich ein weiter Bereich an Materialstärke des Trägerteils in sehr kleinen Stufen abdecken. Durch die Wirkung des zwischen dem Halterungsteil **1** und dem Ankerfuß **2** angeordneten, schirmförmigen Anschlags **15,** der federnd auf der Oberseite des Trägerteils zur Auflage kommt, erfolgt eine kontinuierliche Anpassung an die Werte der Materialstärke zwischen den Stufen. In einem konkreten Fall wurde dies für einen Bereich von insgesamt **F1** gleich 0,6 mm bis **F2** gleich 3,0 mm Materialstärke realisiert (siehe Fig. 2).

Wie erwähnt spreizen sich die Federarme **5, 6** in Richtung auf das Halterungsteil **1 auf,** und zwar bis zur Außenkante **11, 12** der jeweils untersten Stufenfläche **9, 10,** die den größten radialen Abstand **R1** zur Mittelachse M des Befestigungselements bestimmt (siehe Fig. 3 und 4). Die Abstufungen an den Federarmen **5, 6** weisen neben den in verschiedenen Ebenen horizontal bis schräg zur Horizontalen ausgerichtete Stufenflächen **9, 10** auch vertikale Anlageflächen **13, 14** auf, deren radialer Abstand zur Mittelachse **M** mit den folgenden, in dieser Richtung aufsteigenden Abstufungen abnimmt. Diese vertikalen Anlageflächen **13, 14** kommen beim Einsatz des Befestigungselements an der Umfangsfläche der Bohrung zur Anlage, wobei sich die Federarme **5, 6** im Falle einer Bohrung mit kleinem Durchmesser durch die Durchbrüche **4** in den Ankerfuß **2** hineinbewegen, bis die passende Anlagefläche erreicht ist. Durch die versetzte Anordnung der kurzen und langen Federarmpaare **5, 6** können diese eine solche Bewegung auch bei einer engen Bohrung ausführen, ohne sich gegenseitig zu behindern. Mit ihren unterschiedlichen radialen Abständen zur Mittelachse **M** können die Federarme **5, 6** so einen weiten Durchmesserbereich der Bohrung abdecken; der kleinste erreichbare radiale Abstand **R2** entspricht dem Durchmesser des Ankerfußes **2** selbst (siehe Fig. 4). In einem konkreten Fall konnte ein Durchmesserbereich der Bohrung von **D1** gleich 6,2 mm bis **D2** gleich 7,2 mm abgedeckt werden.

Der größte radiale Abstand **R1,** das heißt der der Außenkanten **11, 12** der Federarme **5, 6** zur Mittelachse **M** ist dabei so gewählt, dass 2 x **R1** größer ist als der größte Bohrungsdurchmesser **D1,** damit kann es bei einer seitlichen Belastung des Befestigungselements nicht zu einem Aushaken des Ankerfußes **2** kommen. Der kleinste radiale Abstand **R2,** also der Durchmesser des Ankerfußes **2,** ist so gewählt, dass 2 x **R2** geringfügig kleiner ist als der kleinste Bohrungsdurchmesser **D2,** so dass das Befestigungselement problemlos montiert werden kann.

Das beschriebene Befestigungselement ist also sowohl über einen großen Durchmesserbereich der Bohrung als auch über einen großen Materialstärkenbereich des Trägerteils funktionssicher einsetzbar. Insbesondere wenn die Abstufungen an den Federarmen **5, 6** so versetzt verlaufen, dass einerseits die Stufenflächen **9, 10** beider Federarmpaare **5, 6** bei veränderlicher Materialstärke von Trägerteilen abwechselnd an der Unterseite der Trägerteile und andererseits die Anlageflächen **13, 14** beider Federarmpaare **5, 6** bei veränderlichem Bohrungsdurchmesser abwechselnd an der Umfangsfläche der Bohrung zur Anlage kommen, können beide Bereiche in sehr kleinen Stufen, nahezu kontinuierlich, abgedeckt werden. Für den Materialstärkenbereich erfolgt zwischen den Stufen eine kontinuierliche Anpassung durch den schirmförmigen Anschlag **15,** der federnd auf der Oberseite des Trägerteils zur Auflage kommt.

## Patentansprüche

1. Befestigungselement zur Befestigung eines Bauteils an einem Trägerteil mit einem Halterungsteil (1) für das zu befestigende Bauteil, einem hohlen Ankerfuß (2), mit dem das Befestigungselement in einer durchgehenden Bohrung des Trägerteils verankerbar ist, und einem zwischen dem Halterungsteil (1) und dem Ankerfuß (2) angeordneten federnden Anschlag (15), wobei die Wand des Ankerfußes (2) zwei einander gegenüberliegende Durchbrüche (4) aufweist, von deren Unterkante jeweils zwei sich in Richtung auf das Halterungsteil (1) spreizende Federarme (5, 6) ausgehen, die an ihrem Ende Stirnflächen (7, 8) aufweisen, die nach dem Einsetzen des Befestigungselements in die Bohrung eines Trägerteils an dessen Unterseite zur Anlage kommen, wobei die Stirnflächen (7, 8) zweier sich diagonal gegenüberliegender unterschiedlich langer Federarmpaare (5, 6) in zwei verschiedenen Ebenen liegen, **dadurch gekennzeichnet, dass** sowohl die kurzen Federarme (5) als auch die langen Federarme (6) sich ausgehend von der Unterkante des jeweiligen Durchbruchs (4) in Richtung auf das Halterungsteil (1) radial bis zu einer Außenkante (11) der kurzen Federarme (5) und zu einer Außenkante (12) der langen Federarme (6) erweitern und danach durch mehrere Stufen bis zu ihrer jeweiligen Stirnfläche (7, 8) radial zurückgenommen sind und **dadurch** an jedem Federarm (5, 6) mehrere in verschiedenen Ebenen horizontal bis schräg zur Horizontalen ausgerichtete Stufenflächen (9, 10) und mehrere vertikale Anlageflächen (13, 14) in unterschiedlichem radialen Abstand zur Mittelachse (M) des Befestigungselements gebildet sind, wobei die Stirnflächen (7, 8) und die einzelnen Stufenflächen (9, 10) eines jeweiligen Federarmpaares (5, 6) jeweils in den gleichen verschiedenen Ebenen und dessen einzelne vertikale Anlageflächen (13, 14) im jeweils gleichen radialen Abstand zur Mittelachse (M) liegen, aber im Vergleich zum anderen Federarmpaar (5, 6) in unterschiedlichen Ebenen beziehungsweise in unterschiedlichem radialen Abstand zur Mittelachse (M) liegen.

2. Befestigungselement nach Anspruch 1, **dadurch gekennzeichnet, dass** bei der Montage des Befestigungselements in die Bohrung eines Trägerteils der größte radiale Abstand (R1) einer Außenkante (11, 12) eines Federarms (5, 6) zur Mittelachse (M) größer ist als der halbe Durchmesser (D1 / 2), so dass bei einer seitlichen Belastung des Befestigungselements der Ankerfuß (2) nicht aus dem Trägerteil aushaken kann, und, dass der kleinstmögliche radiale Abstand (R2) von der Wurzel der Federarme (5, 6) zur Mittelachse (M) geringfügig kleiner ist als der halbe Durchmesser (D2 / 2) einer kleinsten Bohrung im Trägerteil.

3. Befestigungselement nach Anspruch 1, **dadurch gekennzeichnet, dass** die Abstufungen an den kurzen Federarmen (5) und die Abstufungen an den langen Federarmen (6) zueinander so versetzt sind, dass die Stirnflächen (8) beziehungsweise die horizontalen bis schräg zur Horizontalen ausgerichteten Stufenflächen (10) der langen Federarme (6) und die Stirnflächen (7) beziehungsweise Stufenflächen (9) der kurzen Federarme (5) mit zunehmender Materialstärke eines Trägerteils abwechselnd an der Unterseite eines solchen Trägerteils zur Anlage bringbar sind und dass entsprechend die vertikalen Anlageflächen (14) der langen Federarme (6) mit zunehmendem Bohrungsdurchmesser (D2 bis D1) abwechselnd an der Umfangsfläche einer Bohrung in Anlage bringbar sind.

## Claims

1. Fixing element for fixing a component on a support part, comprising a retaining part (1) for the component to be fixed, a hollow anchor foot (2) with which the fixing element can be anchored in a continuous bore of the support part, and a spring stop (15) that is arranged between the retaining part (1) and the anchor foot (2), wherein the wall of the anchor foot (2) has two openings (4) lying opposing one another, and wherein two spring arms (5, 6), which widen in the direction of the retaining part (1), originate from the lower edge of each of said openings, said spring arms having at their ends front faces (7, 8) which, after insertion of the fixing element into the bore of a support part, bear against the underside of said support part, wherein the front faces (7, 8) of two diagonally opposed spring arm pairs (5, 6) of differing lengths lie in two different planes, **characterised in that** both the short spring arms (5) and the long spring arms (6) widen radially, starting from the lower edge of each opening (4), in the direction of the retaining part (1) as far as an outer edge (11) of the short spring arms (5) and as far as an outer edge (12) of the long spring arms (6) and then are radially recessed by a plurality of steps as far as their respective front face (7, 8) and thereby a plurality of step faces (9, 10) are formed in different planes which are oriented horizontally or inclined to the horizontal on each spring arm (5, 6) and a plurality of vertical bearing faces (13, 14) are formed at different radial distances from the central axis (M) of the fixing element, wherein the front faces (7, 8) and the individual step faces (9, 10) of each spring arm pair (5, 6) lie in the same respective planes and their individual vertical bearing faces (13, 14) each lie at the same radial distance from the central axis (M) but, relative to the other spring arm pair (5, 6), in different planes and at different radial distances from the central axis (M).

2. Fixing element according to claim 1, **characterised in that**, on mounting the fixing element in the bore of a support part, the largest radial distance (R1) of an outer edge (11, 12) of a spring arm (5, 6) from the central axis (M) is larger than half the diameter (D1/2), so that given a lateral loading of the fixing element, the anchor foot (2) cannot become unhooked from the support part and that the smallest possible radial distance (R2) from the root of the spring arms (5, 6) to the central axis (M) is slightly smaller than half the diameter (D2/2) of a smallest bore in the support part.

3. Fixing element according to claim 1, **characterised in that** the steps on the short spring arms (5) and the steps on the long spring arms (6) are offset relative to one another such that the front faces (8) or the step faces (10) of the long spring arms (6), said step faces being oriented horizontally or inclined to the horizontal, and, with increasing material thickness of a support part, the front faces (7) or the step faces (9) of the short spring arms (5) can be brought to bear alternately against the underside of said support part and that, accordingly, with increasing bore diameter (D2 to D1), the vertical bearing faces (14) of the long spring arms (6) can be brought to bear alternately against the peripheral face of a bore.

## Revendications

1. Organe de fixation servant à fixer un composant structural sur un élément faisant office de support, se composant d'un élément de retenue (1) pour maintenir en position l'élément de construction à fixer, d'une patte d'ancrage creuse (2), au moyen de laquelle l'organe de fixation peut être ancré dans un perçage traversant prévu à cet effet dans l'élément formant support et d'une butée élastique (15) disposée entre l'élément de retenue (1) et la patte d'ancrage (2), la paroi de la patte d'ancrage (2) comportant en l'occurrence deux ouvertures débouchantes (4) à disposition diamétralement opposée, de l'arête inférieure desquelles partent respectivement deux segments élastiques (5, 6) qui vont en s'écartant dans la direction de l'élément de retenue (1), qui comportent au niveau de leur extrémité des faces antérieures (7, 8) qui, après l'insertion de l'organe de fixation dans le perçage d'un élément formant support, viennent s'appliquer contre sa surface inférieure, les faces antérieures (7, 8) de deux paires de segments élastiques (5, 6) de longueur différente, diagonalement opposées, se situant en l'occurrence dans deux plans différents, **caractérisé en ce qu'**aussi bien les segments élastiques de longueur réduite (5) que les segments élastiques de plus grande longueur (6) s'étendent, en partant de l'arête inférieure de l'ouverture débouchante (4) respective, dans la direction de l'élément de retenue (1), dans le plan radial, jusqu'à l'arête extérieure (11) des segments élastiques de longueur réduite et jusqu'à l'arête extérieure (12) des segments élastique de plus grande longueur (6), pour ensuite décroître dans le plan radial, en passant par plusieurs décrochements successifs, jusqu'à leur face antérieure respective (7, 8), ce qui définit, au niveau de chaque segment élastique (5, 6), plusieurs faces étagées (9, 10) orientées dans des plans en correspondance différents, allant du plan horizontal jusqu'à des disposition obliques par rapport à l'horizontale et plusieurs faces d'assise verticales (13, 14) se situant, dans le plan radial, à une distance différente de l'axe (M) de l'organe de fixation, les faces antérieures (7, 8) et les différentes faces étagées (9, 10) de chaque paire de segments élastiques (5, 6) se situant en l'occurrence dans les mêmes plans différents et leurs différentes faces d'assise verticales (13, 14) se trouvant respectivement, dans le plan radial, à la même distance de l'axe (M), mais comparativement à l'autre paire de segments élastiques (5, 6) dans des plans différents, ou encore, dans le plan radial, à des distances de l'axe médian (M) différentes.

2. Organe de fixation selon la revendication 1, **caractérisé en ce que**, lors du montage de l'organe de fixation dans le perçage réalisé dans l'élément faisant office de support, la distance maximale dans le plan radial (R1) d'une arête extérieure (11, 12) d'un segment élastique (5, 6) par rapport à l'axe (M) est supérieure au demi-diamètre (D1/2), ce qui fait que si une sollicitation est exercée sur l'organe de fixation dans le plan latéral, la patte d'ancrage (2) ne peut pas se dégager de son emprise d'accrochage dans l'élément formant support et **en ce que** la distance la plus petite possible dans le plan radial (R2) de la racine des segments élastiques (5, 6) par rapport à l'axe médian (M) est très légèrement inférieure au demi-diamètre (D2/2) du plus petit perçage que comporte l'élément formant support.

3. Organe de fixation selon la revendication 1, **caractérisé en ce que** les gradins successifs que comportent les segments élastiques de longueur réduite (5) et les gradins successifs que comportent les segments élastiques de plus grande longueur (6) sont de préférence respectivement décalés dans des conditions telles que les faces antérieures (8) ou encore les faces étagées (10) des segments élastiques de plus grande longueur (6), orientées dans différents plans allant du plan horizontal jusqu'à des dispositions obliques par rapport à l'horizontale, et les faces antérieures (7) ou encore les faces étagées (9) des segments élastiques de longueur réduite (5), peuvent, au fur et à mesure de l'augmentation de l'épaisseur de la matière d'un élément formant support, être amenées alternativement en contact d'application sur la face inférieure de l'élément formant support, et qu'en correspondance les faces d'assise verticales (14) des segments élastiques de plus grande longueur (6) peuvent, au fur et à mesure que les diamètres de perçage augmentent (D2 jusqu'à D1), être alternativement amenées en contact d'application contre la surface périphérique d'un perçage.
